# FASCICULE DE BREVET EUROPEEN

(11) **EP 3 453 553 B1**
(45) Date de publication et mention de la délivrance du brevet: **01.07.2020**
(21) Numéro de dépôt: 18184896.1
(22) Date de dépôt: 23.07.2018
(51) Int. Cl.: B60K 15/035, B60K 15/03

(54) **ENSEMBLE SOLIDARISÉ D'UN RÉSERVOIR DE CARBURANT ET D'UN ABSORBEUR DE VAPEURS D'HYDROCARBURES**
VERBUNDENE EINHEIT AUS EINEM KRAFTSTOFFTANK UND EINEM KOHLENWASSERSTOFFDAMPFABSORBER
FIXED ASSEMBLY OF A FUEL TANK AND A HYDROCARBON VAPOUR ABSORBER

(30) Priorité: 30.08.2017 FR 1757989
(43) Date de publication de la demande: 13.03.2019
(73) Titulaire: PSA Automobiles SA, 78300 Poissy (FR)
(72) Inventeur: LAFARGE, Jérôme, 91630 Marolles en Hurépoix (FR); VIEUXBLED, Guillaume, 78140 Vélizy Villacoublay (FR)

(56) Documents cités:
- CN-U- 203 438 839
- DE-A1-102015 015 470
- JP-A- H0 979 230
- US-A1- 2012 097 135

## Description

La présente invention concerne un ensemble solidarisé d'un réservoir de carburant et d'un absorbeur de vapeurs d'hydrocarbures, notamment mais pas uniquement dans un véhicule automobile.

Un absorbeur de vapeurs d'hydrocarbures récupère les vapeurs d'hydrocarbures issues du réservoir à carburant d'un véhicule automobile en comprenant une enveloppe remplie de charbon actif et pourvue d'un orifice d'entrée relié au tuyau de mise à l'air du réservoir, d'un orifice de purge, d'un orifice de sortie débouchant vers l'atmosphère et des moyens de fixation de l'enveloppe à une structure de support prévue dans le véhicule, dans le cas spécifique de l'invention un réservoir de carburant.

Le réservoir peut être réalisé par soufflage et porte une pièce d'interface soudée sur son enveloppe extérieure. L'absorbeur peut être réalisé par injection.

L'absorbeur de vapeurs d'hydrocarbures est donc sous la forme d'un élément à part entière qui est ensuite solidarisé au réservoir de carburant par une pièce d'interface. Il est fréquent qu'une telle solidarisation présente l'inconvénient majeur de nécessiter un outillage spécifique pour la solidarisation de l'absorbeur sur la paroi du réservoir de carburant.

De plus, il a été constaté des problèmes de tenue en endurance vibratoire de cette pièce d'interface entre absorbeur et réservoir de carburant. Il a été proposé d'utiliser des pattes de fixation résistantes à des fréquences habituelles de vibration se produisant dans l'environnement de l'ensemble réservoir et absorbeur. Ces pattes de fixation peuvent être surmoulées ou en acier. Ces pattes de fixation n'ont pas donné entière satisfaction.

La pièce ou les pièces d'interface entre réservoir de carburant et absorbeur doivent répondre à plusieurs contraintes. La première contrainte est de permettre un démontage de l'absorbeur sans outil. La deuxième contrainte est de garantir une tenue de la solidarisation de l'ensemble réservoir et absorbeur en endurance vibratoire. La troisième contrainte est de rattraper les jeux et tolérance.

L'état de la technique s'est orienté vers une pièce d'interface du type queue d'aronde. En effet, les contraintes de démontage et d'implantation ne permettent pas de proposer une pièce d'interface solidarisée par vissage. La queue d'aronde est généralement appliquée pour un sens de montage à l'horizontal ou à la verticale, fréquemment du haut vers le bas mais il se peut aussi que le sens de montage soit de bas en haut.

Le document CN 203438839 U décrit un ensemble d'un absorbeur de vapeurs d'hydrocarbures et d'un réservoir de carburant. L'absorbeur de vapeurs d'hydrocarbures est disposé sur la partie centrale arrière de la face d'extrémité supérieure de l'ensemble du réservoir de carburant. Un logement présentant une ouverture en queue d'aronde trapézoïdale est disposé sur le réservoir de carburant ou l'absorbeur et un support en queue d'aronde trapézoïdale est inséré dans le logement lui-même en queue d'aronde trapézoïdale en étant disposé sur l'absorbeur ou le réservoir de carburant.

Un unique moyen d'encliquetage porté par l'absorbeur ou le réservoir de carburant coopère avec un moyen d'encliquetage complémentaire porté par le réservoir de carburant ou l'absorbeur pour un verrouillage de l'absorbeur sur le réservoir de carburant. Cet unique moyen d'encliquetage ne permet cependant pas un encliquetage symétrique de l'absorbeur sur le réservoir de carburant et résistera mal à des vibrations. De même, il n'est ni décrit ni suggéré dans ce document comment guider la queue d'aronde dans le logement.

Par conséquent, le problème selon l'invention est de prévoir, pour un ensemble d'un réservoir de carburant avec un absorbeur de vapeurs de carburant, une solidarisation amovible par queue d'aronde dans un logement qui soit résistante en position par verrouillage tout en procurant une fonction de guidage progressif de la queue d'aronde dans le logement lors de la solidarisation pour permettre le rattrapage de jeux et de tolérance afin de garantir un bon appui de moyens de verrouillage complémentaire.

Pour atteindre cet objectif, il est prévu selon l'invention un ensemble d'un réservoir de carburant et d'un absorbeur de vapeur d'hydrocarbures solidarisé sur le réservoir de manière amovible, le réservoir de carburant portant sur sa paroi extérieure un logement, une queue d'aronde étant portée par une extrémité d'une patte fixée à son autre extrémité à l'absorbeur, au moins une portion de la queue d'aronde étant reçue dans un intérieur du logement porté par le réservoir de carburant, la queue d'aronde étant munie d'au moins un moyen de verrouillage en position coopérant avec un moyen de verrouillage complémentaire porté par le logement, caractérisé en ce que les moyens forment plusieurs couples d'un moyen de verrouillage et d'un moyen de verrouillage complémentaire, les couples effectuant tour à tour une action de verrouillage selon un avancement de la queue d'aronde dans le logement.

On appelle queue d'aronde une pièce taillée en forme de queue d'hirondelle et jouant le rôle d'un tenon qui est inséré dans un logement ou mortaise de forme complémentaire.

L'effet technique est d'obtenir tout d'abord un verrouillage plus résistant que celui proposé par l'état de la technique. Les couples de moyens de verrouillage disposés selon un avancement de la queue d'aronde dans le logement effectuent une action de guidage de la queue d'aronde pendant la solidarisation, un verrouillage temporaire étant exercé par un couple puis par le couple suivant dans le sens de l'avancement de la queue d'aronde dans le logement.

De plus, le cas échéant, le jeu entre l'ensemble formé par la queue d'aronde et son logement de réception avec une possible deuxième patte de fixation est rattrapé du fait du système de verrouillage multiple associé à l'ensemble.

Il peut y avoir plusieurs séries de couples de moyens de verrouillage, les couples d'une même série se verrouillant tour à tour mais deux couples de séries différentes peuvent être verrouillés simultanément en renforçant ainsi le verrouillage. C'est le cas par exemple pour des séries de couples s'étendant parallèlement l'une à l'autre dans le sens d'un avancement de la queue d'aronde dans le logement.

Avantageusement, les moyens de verrouillage en position et les moyens de verrouillage complémentaires sont sous la forme de moyens d'encliquetage complémentaires.

Les moyens d'encliquetage sont faciles à mettre en oeuvre juste par avancement de la queue d'aronde vers l'intérieur du logement et ne requiert pas un espace de montage comme pour un vissage. Les couples de moyens d'encliquetage se verrouillent tour à tour pendant la progression de la queue d'aronde dans le logement.

Avantageusement, les moyens de verrouillage portés par la queue d'aronde sont sous la forme d'une succession de lumières et les moyens de verrouillage complémentaires portés par le logement sont sous la forme de crans, la queue d'aronde portant plus de lumières qu'il n'y a de crans portés par le logement. Un cran pénètre successivement dans une série associée de lumières disposées les unes après les autres.

Avantageusement, les lumières sont extérieures à la portion de la queue d'aronde reçue dans l'intérieur du logement, les lumières s'étendant latéralement sur la queue d'aronde ou étant portées par un bord de la queue d'aronde opposé au logement. Il peut donc y avoir un verrouillage latéral ou un verrouillage sur le bord de la queue d'aronde la plus éloignée au logement.

Avantageusement, la queue d'aronde porte deux rangées de lumières formant chacune une échelle, une rangée de lumières étant disposée sur chaque bord latéral de la queue d'aronde, les extrémités libres des bords latéraux du logement portant chacune un cran pénétrant dans une lumière en vis-à-vis en position de réception au moins partielle de la queue d'aronde dans le logement. Le verrouillage latéral est alors symétrique et réparti sur les deux côtés latéraux de la queue d'aronde, ce qui le rend ferme en position. La dimension des lumières et leur espacement peuvent être adaptés suivant les contraintes de rattrapages de jeux et tolérance.

Avantageusement, la queue d'aronde porte deux rangées de lumières formant chacune une échelle vers chaque extrémité longitudinale du bord de la queue d'aronde opposé au logement, deux crans portés par le logement étant en vis-à-vis respectivement d'une rangée de lumières en position au moins partielle de réception de la queue d'aronde dans l'intérieur du logement. Le verrouillage sur le bord de la queue d'aronde opposé au logement dit bord arrière est aussi symétrique, comparé à celui de l'état de la technique qui était central au bord arrière. Le verrouillage en est ainsi renforcé.

Avantageusement, chaque cran est porté par une languette respective prolongeant le logement en direction de la queue d'aronde quand reçue au moins partiellement dans l'intérieur du logement. Les rangées de lumière et les languettes disposant des crans peuvent être portées indifféremment par la queue d'aronde ou le logement.

Avantageusement, la queue d'aronde présente un socle trapézoïdal avec une forme trapézoïdale de plus petite dimension superposée au socle trapézoïdal, le socle et la forme présentant leur grande base opposée au logement, le socle pénétrant au moins partiellement dans l'intérieur du logement et reposant contre une face d'appui de l'intérieur du logement et la forme faisant au moins saillie hors du logement par une face opposée à la face d'appui de l'intérieur du logement, la face opposée présentant une ouverture pour le passage de la forme. Cette forme faisant saillie peut servir à la préhension par un monteur de la queue d'aronde et d'aide à son montage.

Avantageusement, quand le socle pénètre partiellement dans l'intérieur du logement, le socle présente des épaulements en butée contre le logement en position de réception partielle du socle dans l'intérieur du logement. L'atteinte de la butée peut signifier au monteur que la queue d'aronde est suffisamment enfoncée dans son logement.

Avantageusement, l'absorbeur de vapeur d'hydrocarbures comporte une patte recourbée pointant en direction du réservoir de carburant en position de solidarisation de l'absorbeur sur le réservoir, la patte recourbée s'introduisant sous un relief faisant saillie extérieurement du réservoir, la patte recourbée se trouvant sur un autre côté du relief que la queue d'aronde.

Avantageusement, la queue d'aronde se trouve dans la partie médiane longitudinale de l'absorbeur. La présence d'une patte permet de renforcer le support de l'absorbeur par le réservoir de carburant. Cette patte peut être percée d'un évidement pour le passage d'un élément de solidarisation avec le contour extérieur du réservoir de carburant, dans un endroit pour lequel il y a plus d'espace de travail qu'en partie médiane longitudinale de l'ensemble réservoir et absorbeur.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue en perspective d'un logement solidaire d'un réservoir de carburant et d'un absorbeur de vapeurs d'hydrocarbures constituant un ensemble selon la présente invention, une queue d'aronde reliée à l'absorbeur pénétrant dans le logement, des moyens de verrouillage de la queue d'aronde et du logement étant disposés latéralement selon un premier mode de réalisation,
- la figure 2 est une représentation schématique d'une vue de dessous en perspective de l'ensemble montré à la figure 1,
- la figure 3 est une représentation schématique d'une vue de dessus en perspective d'une coupe de la queue d'aronde et du logement au niveau des moyens de l'ensemble montré à la figure 1,
- la figure 4 est une représentation schématique d'une vue en perspective d'un logement solidaire d'un réservoir de carburant pris isolément de l'ensemble selon la présente invention, des moyens de verrouillage complémentaire du logement étant disposés en arrière de la queue d'aronde selon un deuxième mode de réalisation,
- la figure 5 est une représentation schématique d'une vue en perspective d'une queue d'aronde prise isolément destinée à coopérer avec le logement solidaire d'un réservoir de carburant pris isolément montré à la figure 4 selon le deuxième mode de réalisation,
- la figure 6 est une représentation schématique d'une vue latérale en perspective du logement de la figure 4 insérant une queue d'aronde de la figure 5 conformément au deuxième mode selon la présente invention,
- la figure 7 est une représentation schématique d'une vue en perspective d'un réservoir de carburant solidarisé avec un absorbeur de vapeurs d'hydrocarbures en formant un ensemble selon la présente invention avec des moyens de verrouillage selon le deuxième mode de réalisation.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

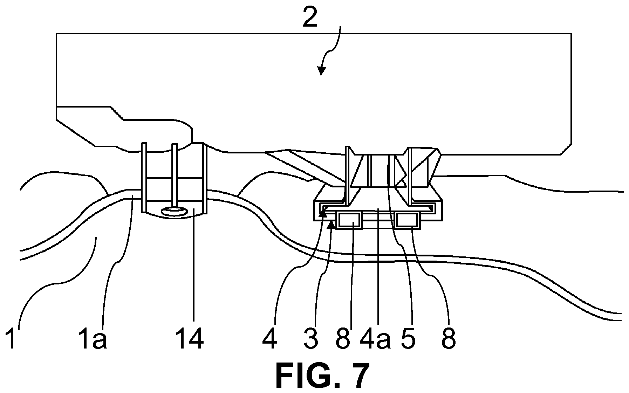

En se référant à toutes les figures et notamment à la figure 7, la présente invention concerne un ensemble d'un réservoir 1 de carburant et d'un absorbeur 2 de vapeur d'hydrocarbures solidarisé sur le réservoir 1 de manière amovible, l'absorbeur 2 étant aussi dénommé canister, le réservoir 1 et l'absorbeur 2 étant seulement visible à la figure 7.

Le réservoir 1 de carburant porte sur sa paroi extérieure un logement 3. Une queue d'aronde 4 est portée par une extrémité d'une patte 5 fixée à son autre extrémité à l'absorbeur 2. Au moins une portion de la queue d'aronde 4 est reçue dans un intérieur 3a (du logement 3 porté par le réservoir 1 de carburant. La queue d'aronde 4 est munie d'au moins un moyen de verrouillage 6, 6a, 6b en position coopérant avec un moyen de verrouillage complémentaire 7 porté par le logement 3.

Selon l'invention, les moyens 6, 6a, 6b; 7 forment plusieurs couples d'un moyen de verrouillage 6, 6a ou 6b et d'un moyen de verrouillage complémentaire 7, les couples effectuant tour à tour une action de verrouillage selon un avancement de la queue d'aronde 4 dans le logement 3. Un verrouillage temporaire est donc prévu dès l'introduction de la queue d'aronde 4 dans le logement 3 et permute d'un couple à l'autre pendant l'avancement de la queue d'aronde 4 dans le logement 3.

Il peut y avoir plusieurs séries de couples auquel cas un seul couple est verrouillé par série mais une série peut avoir un couple verrouillé simultanément à un couple d'une autre série pour renforcer le verrouillage.

Comme il peut être vu aux figures, les moyens de verrouillage 6, 6a, 6b en position et les moyens de verrouillage complémentaires 7 sont sous la forme de moyens d'encliquetage complémentaires. Les moyens de verrouillage 6, 6a, 6b s'encliquètent avec les moyens de verrouillage complémentaires 7 associés.

Les moyens de verrouillage portés par la queue d'aronde 4 peuvent être sous la forme d'une succession de lumières 6, 6a, 6b et les moyens de verrouillage complémentaires portés par le logement 3 peuvent être sous la forme de crans 7, la queue d'aronde 4 portant plus de lumières 6, 6a, 6b qu'il n'y a de crans 7 portés par le logement 3.

Pour une série de couples de verrouillage, il y a donc un seul cran 7 pour plusieurs lumières 6, 6a, 6b, le cran 7 pénétrant successivement dans une lumière 6, 6a, 6b de la rangée de lumières 6, 6a, 6b pendant l'avancement de la queue d'aronde 4 dans l'intérieur 3a du logement 3. Ceci peut se faire simultanément pour au moins deux séries de couples de verrouillages s'étendant de préférence parallèlement l'une à l'autre ou les unes aux autres.

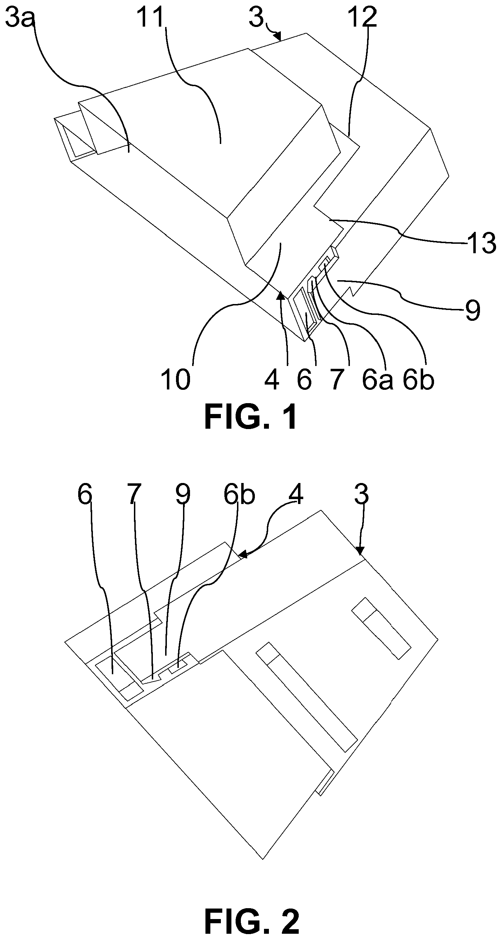

Dans la forme de réalisation préférentielle, les lumières 6, 6a, 6b peuvent être extérieures à la portion de la queue d'aronde 4 reçue dans l'intérieur 3a du logement 3. Dans un premier mode de réalisation de cette forme préférentielle, les lumières 6, 6a, 6b peuvent s'étendre latéralement sur la queue d'aronde 4. Ceci est montré aux figures 1 à 3.

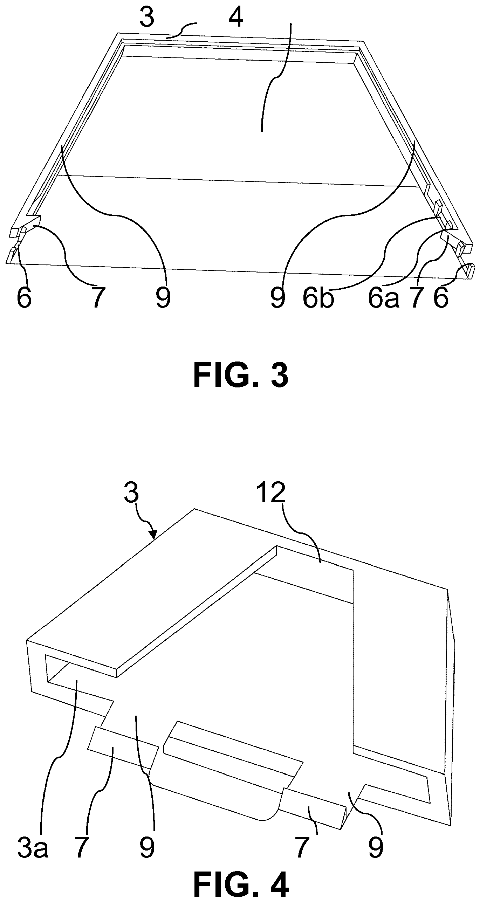

Dans un deuxième mode de réalisation de cette forme préférentielle, les lumières 6, 6a, 6b peuvent être portées par un bord 4a de la queue d'aronde 4 opposé au logement 3, ce bord étant dit bord arrière de la queue d'aronde 4. Ceci est montré aux figures 4 à 7.

Dans le premier mode, la queue d'aronde 4 peut porter deux rangées de lumières 6, 6a, 6b formant chacune une échelle 8, une rangée de lumières 6, 6a, 6b étant disposée sur chaque bord latéral de la queue d'aronde 4. Les extrémités libres des bords latéraux du logement 3 peuvent alors porter chacune un cran 7 pénétrant dans une lumière 6, 6a, 6b en vis-à-vis en position de réception au moins partielle de la queue d'aronde 4 dans le logement 3. Chaque rangée de lumières 6, 6a, 6b et leur cran 7 associé forment une série de couples comme précédemment mentionné.

Dans le deuxième mode, la queue d'aronde 4 peut porter deux rangées de lumières 6, 6a, 6b formant chacune une échelle 8 vers chaque extrémité longitudinale du bord 4a de la queue d'aronde 4 opposé au logement 3. Deux crans 7 portés par le logement 3 peuvent alors être en vis-à-vis respectivement d'une rangée de lumières 6, 6a, 6b en position au moins partielle de réception de la queue d'aronde 4 dans l'intérieur 3a du logement 3. De même que pour le premier mode, chaque rangée de lumières 6, 6a, 6b et leur cran 7 associé forment une série de couples comme précédemment mentionné.

Chaque cran 7 peut être porté par une languette 9 respective prolongeant le logement 3 en direction de la queue d'aronde 4 quand reçue au moins partiellement dans l'intérieur 3a du logement 3. Les languettes 9 peut s'étendre latéralement à la queue d'aronde 4, ceci de chaque côté de la queue d'aronde 4 ou s'éloigner du logement 3 en partant du bord 4a de la queue d'aronde 4 opposé au logement 3, ce bord étant dit bord arrière.

Dans un mode de réalisation avantageux, la queue d'aronde 4 peut présenter un socle 10 trapézoïdal avec une forme 11 trapézoïdale de plus petite dimension superposée au socle 10 trapézoïdal, le socle 10 trapézoïdale et la forme 11 trapézoïdale présentant une grande base et une petite base. Le socle 10 et la forme 11, dans ce mode, peuvent présenter leur grande base opposée au logement 3. Ceci est valable pour les deux modes de réalisation précédemment mentionnés.

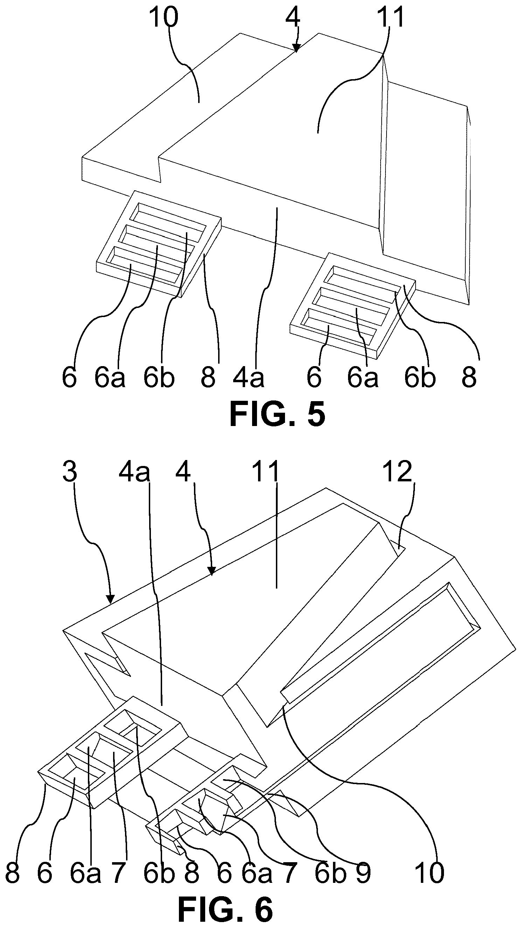

Le socle 10 peut pénétrer au moins partiellement dans l'intérieur 3a du logement 3 et reposer contre une face d'appui de l'intérieur du logement 3. La forme 11 peut faire au moins saillie hors du logement 3 par une face opposée à la face d'appui de l'intérieur 3a du logement 3. Comme illustré aux figures 1 et 6, dans ce cas, la face opposée à la face d'appui du logement 3 peut présenter une ouverture 12 pour le passage de la forme 11. Cette partie faisant saillie peut servir à la préhension de la queue d'aronde 4 par un opérateur et à faciliter son action d'avancement dans l'intérieur 3a du logement 3.

Dans le mode de réalisation pour lequel le socle 10 pénètre au moins partiellement dans l'intérieur 3a du logement 3, le socle 10 peut présenter des épaulements 13 en butée contre le logement 3 en position de réception partielle du socle 10 dans l'intérieur 3a du logement 3. Ceci est montré à la figure 1.

Additionnellement à la queue d'aronde 4 et à un autre endroit du contour extérieur de l'absorbeur 2 espacé de l'endroit portant la queue d'aronde 4, l'absorbeur 2 de vapeur d'hydrocarbures peut comporter une patte recourbée 14 pointant en direction du réservoir 1 de carburant en position de solidarisation de l'absorbeur 2 sur le réservoir 1.

La patte recourbée 14 peut s'introduire sous un relief 1a faisant saillie extérieurement du réservoir 1 de carburant, par exemple sous une nervure portée par la paroi extérieure du réservoir 1. La patte recourbée 14 peut se trouver sur un autre côté du relief 1a que la queue d'aronde 4, ceci sur une même face du réservoir de carburant.

Le relief 1a peut s'étendre sur toute une longueur du réservoir 1 de carburant. L'extrémité libre de la patte recourbée 14 peut présenter un évidement pour le passage d'un élément de fixation du type vis, tige filetée ou rivet avec une portion en vis-à-vis du relief 1a.

L'invention n'est nullement limitée aux modes de réalisation décrits et illustrés qui n'ont été donnés qu'à titre d'exemples.

## Revendications

1. Ensemble d'un réservoir (1) de carburant et d'un absorbeur (2) de vapeur d'hydrocarbures solidarisé sur le réservoir (1) de manière amovible, le réservoir (1) de carburant portant sur sa paroi extérieure un logement (3), une queue d'aronde (4) étant portée par une extrémité d'une patte (5) fixée à son autre extrémité à l'absorbeur (2), au moins une portion de la queue d'aronde (4) étant reçue dans un intérieur (3a) du logement (3) porté par le réservoir (1) de carburant, la queue d'aronde (4) étant munie d'au moins un moyen de verrouillage (6, 6a, 6b) en position coopérant avec un moyen de verrouillage complémentaire (7) porté par le logement (3), **caractérisé en ce que** les moyens (6, 6a, 6b; 7) forment plusieurs couples d'un moyen de verrouillage (6, 6a ou 6b) et d'un moyen de verrouillage complémentaire (7), les couples effectuant tour à tour une action de verrouillage selon un avancement de la queue d'aronde (4) dans le logement (3).

2. Ensemble selon la revendication précédente, dans lequel les moyens de verrouillage (6, 6a, 6b) en position et les moyens de verrouillage complémentaires (7) sont sous la forme de moyens d'encliquetage complémentaires.

3. Ensemble selon la revendication précédente, dans lequel les moyens de verrouillage portés par la queue d'aronde (4) sont sous la forme d'une succession de lumières (6, 6a, 6b) et les moyens de verrouillage complémentaires portés par le logement (3) sont sous la forme de crans (7), la queue d'aronde (4) portant plus de lumières (6, 6a, 6b) qu'il n'y a de crans (7) portés par le logement (3).

4. Ensemble selon la revendication précédente, dans lequel les lumières (6, 6a, 6b) sont extérieures à la portion de la queue d'aronde (4) reçue dans l'intérieur (3a) du logement (3), les lumières (6, 6a, 6b) s'étendant latéralement sur la queue d'aronde (4) ou étant portées par un bord (4a) de la queue d'aronde (4) opposé au logement (3).

5. Ensemble selon la revendication 4, dans lequel la queue d'aronde (4) porte deux rangées de lumières (6, 6a, 6b) formant chacune une échelle (8), une rangée de lumières (6, 6a, 6b) étant disposée sur chaque bord latéral de la queue d'aronde (4), les extrémités libres des bords latéraux du logement (3) portant chacune un cran (7) pénétrant dans une lumière (6, 6a, 6b) en vis-à-vis en position de réception au moins partielle de la queue d'aronde (4) dans le logement (3).

6. Ensemble selon la revendication 4, dans lequel la queue d'aronde (4) porte deux rangées de lumières (6, 6a, 6b) formant chacune une échelle (8) vers chaque extrémité longitudinale du bord (4a) de la queue d'aronde (4) opposé au logement (3), deux crans (7) portés par le logement (3) étant en vis-à-vis respectivement d'une rangée de lumières (6, 6a, 6b) en position au moins partielle de réception de la queue d'aronde (4) dans l'intérieur (3a) du logement (3).

7. Ensemble selon l'une quelconque des deux revendications précédentes, dans lequel chaque cran (7) est porté par une languette (9) respective prolongeant le logement (3) en direction de la queue d'aronde (4) quand reçue au moins partiellement dans l'intérieur (3a) du logement (3).

8. Ensemble selon l'une quelconque des revendications précédentes, dans lequel la queue d'aronde (4) présente un socle (10) trapézoïdal avec une forme (11) trapézoïdale de plus petite dimension superposée au socle (10) trapézoïdal, le socle (10) et la forme (11) présentant leur grande base opposée au logement (3), le socle (10) pénétrant au moins partiellement dans l'intérieur (3a) du logement (3) et reposant contre une face d'appui de l'intérieur (3a) du logement (3) et la forme (11) faisant au moins saillie hors du logement (3) par une face opposée à la face d'appui de l'intérieur (3a) du logement (3), la face opposée présentant une ouverture (12) pour le passage de la forme (11).

9. Ensemble selon la revendication précédente, dans lequel, quand le socle (10) pénètre partiellement dans l'intérieur (3a) du logement (3), le socle (10) présente des épaulements (13) en butée contre le logement (3) en position de réception partielle du socle (10) dans l'intérieur (3a) du logement (3).

10. Ensemble selon la revendication précédente, dans lequel, l'absorbeur (2) de vapeur d'hydrocarbures comporte une patte recourbée (14) pointant en direction du réservoir (1) de carburant en position de solidarisation de l'absorbeur (2) sur le réservoir (1), la patte recourbée (14) s'introduisant sous un relief (1a) faisant saillie extérieurement du réservoir (1), la patte recourbée (14) se trouvant sur un autre côté du relief (1a) que la queue d'aronde (4).

## Patentansprüche

1. Baugruppe aus einem kraftstofftank (1) und einem kohlenwasserstoffdampf-absorber (2), der abnehmbar an dem tank (1) befestigt ist, wobei der kraftstofftank (1) an seiner Außenwand ein Gehäuse (3) trägt, wobei ein Schwalbenschwanz (4) von einem ende einer lasche (5) getragen wird, die an ihrem anderen ende an dem absorber (2) befestigt ist, wobei wenigstens ein teil des schwalbenschwanzes (4) in einem Innenraum (3a) des gehäuses (3) aufgenommen ist, der von dem kraftstofftank (1) getragen wird, wobei der schwalbenschwanz (4) mit wenigstens einem mittel (6, 6a, 6b) zur verriegelung in position versehen ist, das mit einem komplementären verriegelungsmittel (7) zusammenwirkt, das von dem gehäuse (3) getragen wird, **dadurch gekennzeichnet, dass** das mittel (6, 6a, 6b; 7) eine mehrzahl von paaren eines verriegelungsmittels (6, 6a oder 6b) und eines komplementären verriegelungsmittels (7) bilden, wobei die paare ihrerseits eine verriegelungswirkung entsprechend einer vorwärtsbewegung des schwalbenschwanzes (4) in dem gehäuse (3) ausführen.

2. Baugruppe nach dem vorstehenden anspruch, bei der die verriegelungsmittel (6, 6a, 6b) in position und die komplementären verriegelungsmittel (7) in Form von komplementären verriegelungsmitteln vorliegen.

3. Baugruppe nach dem vorhergehenden anspruch, bei der die vom schwalbenschwanz (4) getragenen verriegelungsmittel in form einer folge von schlitzen (6, 6a, 6b) und die vom gehäuse (3) getragenen komplementären verriegelungsmittel in form von kerben (7) vorliegen, wobei der schwalbenschwanz (4) mehr schlitze (6, 6a, 6b) trägt als es kerben (7) gibt, die vom gehäuse (3) getragen werden.

4. Baugruppe nach dem vorstehenden anspruch, bei der die öffnungen (6, 6a, 6b) außerhalb des im Inneren (3a) des gehäuses (3) aufgenommenen teils des schwalbenschwanzes (4) liegen, wobei die öffnungen (6, 6a, 6b) sich seitlich über den schwalbenschwanz (4) erstrecken oder von einer kante (4a) des schwalbenschwanzes (4) gegenüber dem gehäuse (3) getragen werden.

5. Baugruppe nach anspruch 4, bei der der schwalbenschwanz (4) zwei reihen von schlitzen (6, 6a, 6b) trägt, die jeweils eine leiter (8) bilden, wobei eine reihe von schlitzen (6, 6a, 6b) an jeder seitenkante des schwalbenschwanzes (4) angeordnet ist, wobei die freien enden der seitenkanten des gehäuses (3) jeweils eine kerbe (7) tragen, die in einen gegenüberliegenden Schlitz (6, 6a, 6b) in der position der zumindest teilweisen aufnahme des schwalbenschwanzes (4) in dem gehäuse (3) eindringt.

6. Baugruppe nach anspruch 4, bei der der schwalbenschwanz (4) zwei reihen von schlitzen (6, 6a, 6b) trägt, die jeweils eine leiter (8) zu jedem längsende der kante (4a) des schwalbenschwanzes (4) gegenüber dem Gehäuse (3) bilden, wobei zwei von dem gehäuse (3) getragene kerben (7) jeweils einer reihe von schlitzen (6, 6a, 6b) in einer zumindest teilweisen position zur aufnahme des schwalbenschwanzes (4) im inneren (3a) des gehäuses (3) gegenüberliegen.

7. Baugruppe gemäß einem der beiden vorhergehenden ansprüche, bei dem jede kerbe (7) von einer entsprechenden zunge (9) getragen wird, die das gehäuse (3) in richtung des schwalbenschwanzes (4) verlängert, wenn sie zumindest teilweise im Inneren (3a) des gehäuses (3) aufgenommen wird.

8. Baugruppe nach einem der vorstehenden ansprüche, wobei der schwalbenschwanz (4) eine trapezförmige basis (10) mit einer trapezform (11) kleinerer abmessung aufweist, die der trapezförmigen basis (10) überlagert ist, wobei die basis (10) und die form (11) ihre große basis gegenüber dem gehäuse (3) haben, die basis (10) zumindest teilweise in das innere (3a) des gehäuses (3) hineinragt und an einer auflagefläche des inneren (3a) des gehäuses (3) anliegt, und die form (11) zumindest auf einer seite aus dem gehäuse (3) gegenüber der auflagefläche des inneren (3a) des gehäuses (3) herausragt, wobei die gegenüberliegende seite eine Öffnung (12) für den durchgang der form (11) aufweist.

9. Baugruppe nach dem vorhergehenden anspruch, bei der, wenn die basis (10) teilweise in das Innere (3a) des gehäuses (3) eindringt, die basis (10) schultern (13) aufweist, die an das gehäuse (3) in der position der teilweisen aufnahme der basis (10) im inneren (3a) des gehäuses (3) anstoßen.

10. Baugruppe nach dem vorhergehenden anspruch, bei der der kohlenwasserstoffdampf-absorber (2) eine gekrümmte lasche (14) aufweist, die in der position, in der der absorber (2) an dem tank (1) befestigt ist, in richtung des kraftstofftanks (1) zeigt, wobei die gekrümmte lasche (14) unter einer aussparung (1a) eingefügt ist, die von dem tank (1) nach außen vorsteht, wobei die gekrümmte lasche (14) auf einer anderen seite der aussparung (1a) als der schwalbenschwanz (4) angeordnet ist.

## Claims

1. Assembly of a fuel tank (1) and a hydrocarbon vapour absorber (2) removably attached to the tank (1), the fuel tank (1) carrying a housing (3) on its outer wall, a dovetail (4) being carried by one end of a lug (5) fixed at its other end to the absorber (2), at least a portion of the dovetail (4) being received in an interior (3a) of the housing (3) carried by the fuel tank (1), the dovetail (4) being provided with at least one means (6, 6a, 6b) for locking in position cooperating with a complementary locking means (7) carried by the housing (3), **characterised in that** the means (6, 6a, 6b; 7) form a plurality of pairs of a locking means (6, 6a or 6b) and a complementary locking means (7), the pairs performing in turn a locking action according to an advancement of the dovetail (4) in the housing (3).

2. Assembly according to the preceding claim, wherein the locking means (6, 6a, 6b) in position and the complementary locking means (7) are in the form of complementary latching means.

3. Assembly according to the preceding claim, wherein the locking means carried by the dovetail (4) are in the form of a succession of slots (6, 6a, 6b) and the complementary locking means carried by the housing (3) are in the form of notches (7), the dovetail (4) carrying more slots (6, 6a, 6b) than there are notches (7) carried by the housing (3).

4. Assembly according to the preceding claim, wherein the apertures (6, 6a, 6b) are external to the portion of the dovetail (4) received in the interior (3a) of the housing (3), the apertures (6, 6a, 6b) extending laterally over the dovetail (4) or being carried by an edge (4a) of the dovetail (4) opposite the housing (3).

5. Assembly according to claim 4, in which the dovetail (4) carries two rows of slots (6, 6a, 6b) each forming a ladder (8), one row of slots (6, 6a, 6b) being arranged on each side edge of the dovetail (4), the free ends of the side edges of the housing (3) each carrying a notch (7) penetrating into an opposite slot (6, 6a, 6b) in the position of at least partial reception of the dovetail (4) in the housing (3).

6. Assembly according to claim 4, in which the dovetail (4) carries two rows of slots (6, 6a, 6b) each forming a ladder (8) towards each longitudinal end of the edge (4a) of the dovetail (4) opposite the housing (3), two notches (7) carried by the housing (3) respectively facing a row of slots (6, 6a, 6b) in an at least partial position for receiving the dovetail (4) in the interior (3a) of the housing (3).

7. Assembly according to either of the two preceding claims, in which each notch (7) is carried by a respective tongue (9) extending the housing (3) towards the dovetail (4) when received at least partially in the interior (3a) of the housing (3).

8. Assembly according to any one of the preceding claims, wherein the dovetail (4) has a trapezoidal base (10) with a trapezoidal shape (11) of smaller dimension superimposed on the trapezoidal base (10), the base (10) and the shape (11) having their large base opposite the housing (3), the base (10) projecting at least partially into the interior (3a) of the housing (3) and resting against a bearing surface of the interior (3a) of the housing (3), and the form (11) projecting at least on one side from the housing (3) opposite the bearing surface of the interior (3a) of the housing (3), the opposite side having an opening (12) for the passage of the form (11).

9. Assembly according to the preceding claim, wherein, when the base (10) partially penetrates the interior (3a) of the housing (3), the base (10) has shoulders (13) abutting against the housing (3) in the position of partial reception of the base (10) in the interior (3a) of the housing (3).

10. Assembly according to the preceding claim, in which the hydrocarbon vapour absorber (2) comprises a curved tab (14) pointing in the direction of the fuel tank (1) in the position in which the absorber (2) is attached to the tank (1), the curved tab (14) being inserted under a relief (1a) projecting externally from the tank (1), the curved tab (14) being located on a different side of the relief (1a) from the dovetail (4).
